# EUROPÄISCHE PATENTSCHRIFT

(11) **EP 2 067 271 B1**
(45) Veröffentlichungstag und Bekanntmachung des Hinweises auf die Patenterteilung: **27.07.2016**
(21) Anmeldenummer: 07817518.9
(22) Anmeldetag: 14.09.2007
(51) Int. Cl.: H04B 5/00

(54) **LAGERUNG EINER VERTIKALACHSIGEN WASSERKRAFTMASCHINENWELLE**
TURBINE APPARATUS
APPAREIL À TURBINE

(30) Priorität: 14.09.2006 DE 102006043946
(43) Veröffentlichungstag der Anmeldung: 10.06.2009
(73) Patentinhaber: Oswald Elektromotoren Gmbh, 63897 Miltenberg (DE)
(72) Erfinder: OSWALD, Johannes, 63897 Miltenberg (DE)
(74) Vertreter: Thürer, Andreas
(86) Internationale Anmeldenummer: PCT/DE2007/001646
(87) Internationale Veröffentlichungsnummer: WO 2008/031426

(56) Entgegenhaltungen:
- WO-A-03/023224
- CH-A- 359 668
- FR-A- 2 392 246
- GB-A- 2 423 650
- US-A- 5 905 311
- US-A- 6 104 097
- US-A1- 2003 048 651

## Beschreibung

Die Erfindung betrifft eine Turbinenvorrichtung für ein Wasserkraftwer wie z.B. aus FR-A-2 392 246 bekannt, mit einem um eine, insbesondere vertikal angeordnete, Turbinendrehachse drehbaren Turbinenlaufrad mit Turbinenschaufeln, die in einem, insbesondere festen, Winkel gegenüber dem Turbinenlaufrad angebracht sind, mit einem Generator, der die mechanische Rotationsenergie des Turbinenlaufrades in elektrische Energie umwandelt, wobei der Generator insbesondere ein Ringgenerator ist, mit einem ringförmigen Rotor und einem entsprehend ringförmig angeordneten Stator. Die Erfindung betrifft weiterhin eine topfförmige Kartusche, einen Umrichter und ein Verfahren zum Betreiben einer Turbinenvorrichtung.

Als nachteilig erweist sich bei Turbinenvorrichtungen des Stands der Technik, insbesondere, dass sie sehr ausladend aufgebaut sind, und einen großen Wartungsaufwand haben.

Aufgabe der vorliegenden Erfindung ist es, eine Turbinenvorrichtung bereitzustellen, die einfach aufzubauen ist und eine lange Lebensdauer aufweist.

Die Aufgabe wird gelöst durch eine obengenannte Turbinenvorrichtung, wobei die Turbinendrehachse drehfest an den Rotor gekoppelt ist und die Drehung um die Turbinendrehachse mittels einer Hohlwelle erfolgt, mit einer topfartigen Aufnahme, in die ein feststehender Lagerzapfen mit umgebend angeordneten, beweglichen Lagern insbesondere direkt eingesetzt ist und das Turbinenlaufrad und der Rotor um den Lagerzapfen drehbar sind.

Die vorgeschlagene Turbinenvorrichtung ist sehr kompakt und stabil aufgebaut und kann vollständig unter dem Wasserspiegel eingesetzt werden. Insbesondere eine Anwendung in Kleinwasserkraftwerken ist vorteilhaft, da durch die kompakte Ausführungsform ein geringer Wasserspiegel ausreicht. Die Turbinenvorrichtung kann geberlos betrieben werden, so dass nach Entfernen einer Deckvorrichtung ein zentraler Zugang zu dem Lagerzapfen in der Aufnahme der Hohlwelle ohne Ausbau der Turbinenvorrichtung einfach möglich ist.

Die vorgeschlagene Vorrichtung kann, auch insbesondere in Form der Kartusche, als Einsatz auch zur Modernisierung vorhandener Turbinen verwendet werden, insbesondere zur Leistungserhöhung.

Vorteilhaft ist es, wenn der Generator ein Synchrongenerator ist, wobei der Rotor insbesondere mit Permanentmagneten versehen ist. Der Synchrongenerator kann mittels eines geregelten Umrichters drehzahlvariabel gesteuert werden, so dass immer eine optimale Leistungsabgabe vorliegt, ohne dass eine Aufwendige Einstellung der Turbinenschaufeln vorgenommen werden müsste. Durch die Verwendung der Permanentmagnete ist kein Schleifkontakt notwendig, der sehr verschleißanfällig ist.

Ein geringer Wartungsaufwand liegt vor, wenn die topfartige Aufnahme mit einem Schmiermittel, insbesondere Öl, in einer vorbestimmten Menge, insbesondere über ein unteres Traglager hinausreichend, gefüllt ist. In der schmiermittelgefüllten Aufnahme laufen die Lager sehr leicht, wobei das Schmiermittel jedoch sauber bleibt, da kein Abrieb geschieht. Das Schmiermittel wird auch durch die Lagerung unter Wasser nicht durch hohe Temperaturen belastet, es entsteht kein Schaum wegen der geringen Geschwindigkeiten. Die sichere Schmiermittelhalterung ist umweltschonend, da kein Schmiermittel austreten kann

Eine besonders kompakte Vorrichtung liegt vor, wenn die Hohlwelle einstückig mit dem Rotor ausgebildet ist.

Ein einfacher und schneller Austausch der Lagerung und insbesondere auch dein Schmiermittelflüssigkeit möglich, wenn die topfartige Aufnahme durch eine drehfest an die Hohlwelle gekoppelten Kartusche gebildet ist, wobei die Kartusche das Schmiermittel und den Lagerzapfen mit den Lagern aufnimmt.

Eine Wartung oder Reparatur, insbesondere ein Schmiermittelaustausch kann auf einfache Weise geschehen, wenn die Kartusche von der Hohlwelle loszulösen, insbesondere durch Lösen von Verbindungsmitteln zwischen Kartuschenrand und Hohlwellenrand, und insbesondere mitsamt Schmiermittel zu entfernen ist.

Eine Entfernung des Lagerzapfens ist erleichtert, wenn der Lagerzapfen in einer die Turbinenvorrichtung zumindest oberseitig abschließenden Deckvorrichtung angeordnet ist, wobei der Lagerzapfen mitsamt den Lagern durch Entfernen der Deckvorrichtung aus der topfartigen Aufnahme zu entfernen ist. Zudem ist durch eine derartige Ausführung eine besonders kompakte Anordnung gegeben.

Vorteilhaft ist es, wenn der Generator von einer, insbesondere glockenartigen, Umhüllung umschlossen ist, die zu Erzeugung eines Gasgegendruckbereichs zumindest im Betrieb lediglich nach unten offen ist. Das in den Umhüllungsbereich von unten eindringende Wasser durch einen Gasgegendruck im Inneren der Umhüllung gebremst, bis ein Gleichgewicht erreicht ist und ein Gaspolster das Wasser aus der Umhüllung und damit beispielsweise aus der Umgebung des Generators fernhält.

Ein zusätzlicher Schutz gegen einen Kontakt von Wasser mit dem Generator bei einem eventuellen Eindringen in die Umhüllung ist gegeben, wenn im Inneren der Umhüllung ein gegenüber einer Umhüllungswand abgedichtetes ringförmiges Schutzmittel eingesetzt ist, das einen Zwischenraum mit der Öffnung der Umhüllung umfasst und einen Bereich des Generators ausgrenzt.

Vorteilhaft ist es, wenn ein elektrisch mit dem Generator verbundener Umrichter direkt an die Umhüllung angebracht ist. Hierdurch entfallen lange und reparaturanfällige Leitungen zwischen Umrichter und Generator, die unter Wasser besonders abgeschirmt werden müssten. Der Umrichter kann mit einer ausreichenden Abdichtung gegen Eindringen von Wasser zusammen mit der Turbine vollständig unter Wasser gesetzt sein. Durch die Einrichtung unter der Wasseroberfläche sind Umrichtergeräusche an der Oberfläche reduziert. Zudem kann ein kleinerer Umrichter verwendet werden. Durch das Wasser ist eine gute Kühlung möglich und keine aktive Luftkühlung notwendig. Die Drehzahl kann entsprechend dem besten Turbinenwirkungsgrad, unabhängig von der Stellung einer Leitschaufelvorrichtung eingestellt werden.

Vorteilhaft ist es, wenn ein Gaszugang für ein Sperrgas, insbesondere ein Inertgas, insbesondere N2, an den Gasgegendruckbereich der glockenartigen Umhüllung angebracht ist. Hierdurch kann ein weiter erhöhter Innendruck in der Umhüllung und insbesondere eine den Generator schützende Inertgasatmosphäre geschaffen werden.

Ein einfacher Zugang zu der Umhüllung und insbesondere zu dem inneren Lagerzapfen ist möglich, wenn die glockenartige Umhüllung an einer Oberseite durch die Deckvorrichtung mit dem Lagerzapfen abgeschlossen ist

Die Aufgabe wird zudem gelöst durch eine topfartige Kartusche mit einer Füllung mit Schmiermittel zum Einsetzen in eine Aufnahme einer Hohlwelle einer Turbinenvorrichtung, insbesondere nach einem der vorhergehenden Ansprüche, zur Aufnahme eines zylinderförmigen Lagerzapfens und den Lagerzapfen umgebenden Lagern, wobei die Kartusche ohne die Hohlwelle aus der Hohlwelle entnehmbar ist. Die Kartusche vereinfacht den Aufbau der Turbinenvorrichtung insbesondere zur sicheren Lagerung der Turbinenvorrichtung und zu schnellen Reparatur, da die Kartusche als Einheit lösgelöst und ausgetauscht werden kann, ohne dass die Turbinenvorrichtung ausgebaut werden müsste.

Die Aufgabe wird ebenfalls gelöst durch einen Umrichter zum Betreiben einer Turbinenvorrichtung, die im wesentlichen unter Wasser angeordnet ist, insbesondere nach einem der Ansprüche 1 bis 12, wobei der Umrichter zusammen mit der Turbinenvorrichtung unter Wasser angeordnet ist und gegen Eindringen von Wasser abgedichtet ist.

Hierdruch ist die Vorrichtung sehr kompakt ohne weitere wartungsanfällige Kabelstrecken. Insbesondere zusammen mit dem Ringgenerator lässt sich somit eine wartungsarme Turbinenvorrichtung erhalten.

Vorteilhaft ist es, wenn durch eine generatorseitige Gleichrichterkomponente eine Zwischenspannung zu erzeugen ist, die über einen netzseitigen Einspeisewechselrichter in eine netzkonforme Spannung umzuwandlen ist. Es liegen jeweils einfache Komponenten in einer presgünstigen Form vor.

Vorteilhaft ist es, wenn durch einen generatorseitigen Wechselrichter eine nahezu konstante Zwischenspannung zu erzeugen ist und, die über über einen netzseitigen Einspeisewechselrichter in eine netzkonforme Spannung umzuwandlen ist. Die nahezu konstante Zwischenspannung ermöglicht insbesondere im Zusammenhang mit dem vorgeschlagenen Synchronringgenerator eine sehr genaue Generatorregelung, insbesondere mit einer nahezu sinusförmigen Spannung und einem sehr hohen Wirkungsgrad.

Die Aufgabe wird ebenfalls gelöst durch ein Verfahren zum Betreiben einer Turbinenvorrichtung, insbesondere nach einem der Ansprüche 1 bis 12, wobei eine Kartusche zur Lagerung eines Schmiermittels durch Entfernen einer Deckvorrichtung zu entnehmen ist, insbesondere für Reparatur- und Wartungsarbeiten.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine Turbinenvorrichtung und
- Fig. 2: Umrichter einer Turbinenvorrichtung.

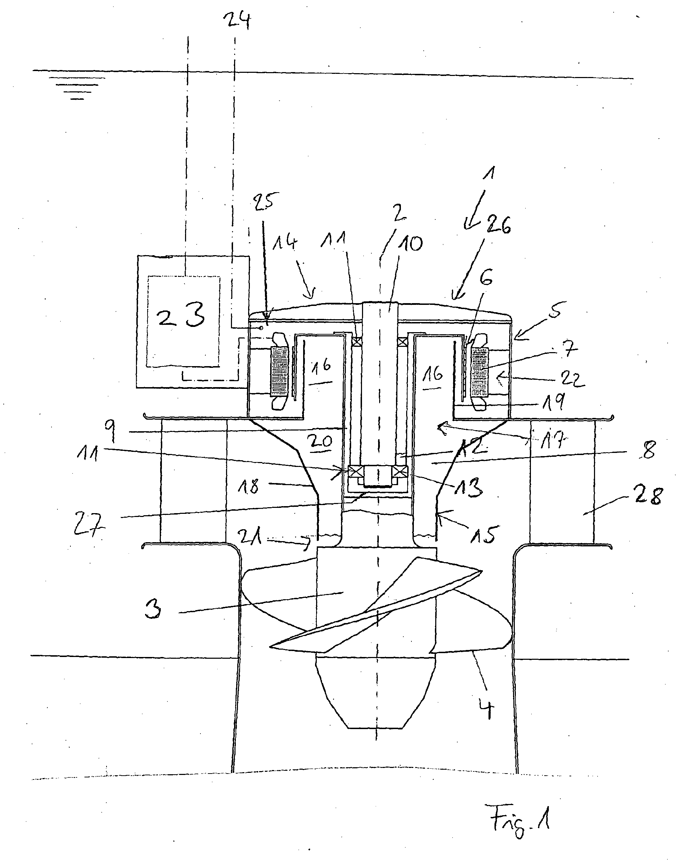

Fig. 1 zeigt eine Turbinenvorrichtung 1. Die Turbinenvorrichtung 1 weist eine vertikale Turbinendrehachse 2 auf, um die sich eine Hohlwelle 8 mit einem Laufrad 3 mit Turbinenflügeln 4 dreht. Die Turbinenflügel 4 sind feststehend mit einem festen Winkel gegenüber dem Laufrad 3 eingerichtet. Die Turbinenvorrichtung 1 weist einen Ringgenerator 5 auf. Der Ringgenerator 5 weist einen inneren Rotor 6 mit Permanentmagneten auf, der mit der Hohlwelle 8 drehfest verbunden ist. Dem Rotor 6 zugeordnet ist ein umlaufender, ebenfalls ringförmiger Stator 7 des Ringgenerators 5. Der Ringgenerator kann ein Synchrongenerator sein und durch einen Umrichter 23 drehzahlvariabel betreiben werden, so dass eine optimierte Anpassung der Turbinendrehung auf mit feststehenden Turbinenschaufeln erfolgen kann. Die Turbinenvorrichtung 1 ist getriebelos. Der Generator ist langsam laufend und hochpolig aufgebaut.

Eine Leitschaufelvorrichtung 28 leitet Wasser zu dem Laufrad 3, das durch die Strömung angetrieben wird. Durch den Betrieb als drehzahlvariable Synchronmaschine induziert der sich drehende Rotor 6 mit seinen schleifkontaktlos zu betreibenden Permanentmagneten in der Wicklung des Stators 7 ein dreiphasiges Drehspannungssystem, das wird durch den Umrichter 23 drehzahlvariabel insbesondere zwischen 20-120% der Nennwerte betrieben wird.

Die Turbinenvorrichtung 1 ist eine kompakte, vertikal aufgebaute Einheit, die einteilig montiert und vollständig unter Wasser betrieben werden. Die Vorrichtung weist einen Umrichter 23 auf, der in einem sehr kurzen Kontakt zu dem Ringgenerator der Turbinenvorrichtung steht und mit der Turbinenvorrichtung zu einer wasserdichten Einheit verbunden ist. Hierdurch sind die Umrichtergeräusche an der Oberfläche reduziert und insbesondere kleinere Umrichter möglich. Die Verbesserung der EMV zwischen Umrichter und Generator wird durch den direkten geschirmten Anschluss gewährleistet. Hierdurch ist auch eine große Entfernung zwischen Turbine und Schaltanlage möglich.

Die Turbinenvorrichtung 1 weist innerhalb einer Aufnahme 27 der Hohlwelle 8 eine entnehmbare Kartusche 27 auf, die mit Schmiermittel 12, insbesondere Öl, bis oberhalb einer Lagerung 11, insbesondere eines unteren Traglagers 13 gefüllt ist und somit eine nahezu wartungsfreie Lagereinheit bildet, die sich bei eingebauter Turbine montieren und demontieren lässt. Durch die sehr gute Schmierung laufen die Lager laufen sehr leicht ohne Abrieb so dass das Schmiermittel Öl sauber bleibt. Es entstehen keine hohen Temperaturen. Das Schmiermittel wird nicht aufgeschäumt wegen der geringen Geschwindigkeiten. Die Kartusche ist als Lagereinheit ensetzbar mit auf Lebensdauer geschmierten Lagern, so dass keine Nachschmierung erforderlich ist.

Es ist ein geberloser Betrieb möglich, der einen zentralen Zugang zu der Lagerung ermöglicht.

Durch eine insbesondere glockenförmige Umhüllung 15 liegt im Bereich 22 des Generators eine Gasdichtung durch einen Gasgegendruckbereich 16 zu dem eindringenden Wasser der Umgebung vor. Der Gasbereich kann insbesondere, druckgeführt aufgebaut sein insbesondere durch Inertgas. Die verschleißfreie Gaspolsterdichtung schützt Lagerung und den Generator gegen Wasser. Es liegen keine schleifenden Dichtungen vor.

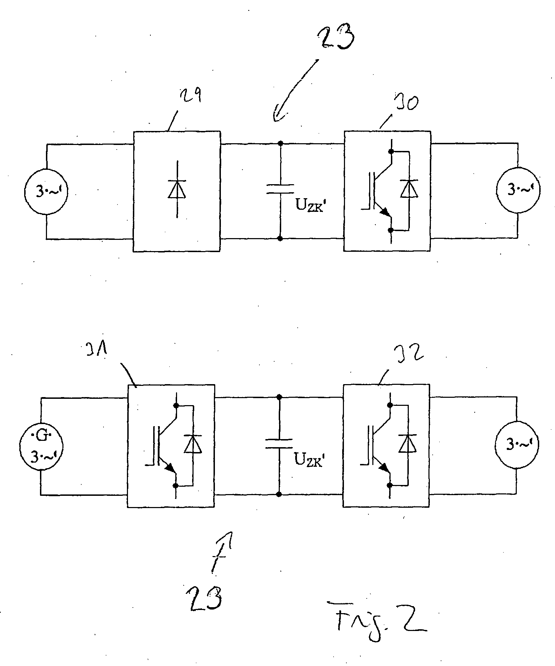

Fig. 2 zeigt einen Umrichter 23 einer Turbinenvorrichtung 1. Die Drehzahl kann entsprechend entsprechend dem besten Turbinenwirkungsgrad, unabhängig von der Stellung der Leitschaufelvorrichtung eingestellt werden. Der Umrichter 23, weist in einer Ausführungsform eine generatorseitige ungeregelte Gleichrichterkomponente 29 und einen netzseitigen Einspeisewechselrichter 30 auf. Der Umrichter kann in einer anderen Ausführungsform einen generatorseitigen Wechselrichter 31 und einen netzseitigen Wechselrichter 32 aufweisen. Es kann hierzu ein fest eingeprägtes Regelungsverfahren im Umrichter 23 oder beispielsweise ein MPP-Tracking-Verfahren verwendet werden, wobei durch das Optimierungsverfahren, unabhängig von den Eigenschaften der Turbine ein größtmöglicher Energieeintrag sicherstellt wird.

Ein integrierter Bremsschopper kann als Schutz der Anlage bei Netzausfall dienen.

### BEZUGSZEICHENLISTE

- 1: Turbinenvorrichtung
- 2: Turbinendrehachse
- 3: Turbinenlaufrad
- 4: Turbinenschaufel
- 5: Ringgenerator
- 6: Rotor
- 7: Stator
- 8: Hohlwelle
- 9: Aufnahme
- 10: Lagerzapfen
- 11: Lager
- 12: Schmiermittel
- 13: Traglager
- 14: Deckvorrichtung
- 15: Umhüllung
- 16: Gasgegendruckbereichs
- 17: Inneren
- 18: Umhüllungswand
- 19: Schutzmittel
- 20: Zwischenraum
- 21: Öffnung
- 22: Bereich
- 23: Umrichter
- 24: Gaszugang
- 25: Sperrgas
- 26: Oberseite
- 27: Kartusche
- 28: Leitschaufelvorrichtung
- 29: Gleichrichterkomponente
- 30: Einspeisewechselrichter
- 31: generatorseitiger Wechselrichter
- 32: Einspeisewechselrichter
- Uzk: Zwischenspannung

## Patentansprüche

1. Turbinenvorrichtung (1) für ein Wasserkraftwerk, mit einem um eine Turbinendrehachse (2) drehbaren Turbinenlaufrad (3) mit Turbinenschaufeln (4), die in einem Winkel gegenüber dem Turbinenlaufrad (3) angebracht sind, mit einem Generator, der die mechanische Rotationsenergie des Turbinenlaufrades in elektrische Energie umwandelt, wobei der Generator ein Ringgenerator (5) ist, mit einem ringförmigen Rotor (6) und einem entsprechend ringförmig angeordneten Stator (7), **dadurch gekennzeichnet, dass** die Turbinendrehachse (2) drehfest an den Rotor (6) gekoppelt ist und die Drehung um die Turbinendrehachse (2) mittels einer Hohlwelle (8) erfolgt, mit einer topfartigen Aufnahme (9), in die ein feststehender Lagerzapfen (10) mit umgebend angeordneten, beweglichen Lagern (11) eingesetzt ist und das Turbinenlaufrad (3) und der Rotor (6) um den Lagerzapfen (10) drehbar sind.

2. Turbinenvorrichtung nach Anspruch 1, **dadurch gekennzeichnet, dass** der Generator ein Synchrongenerator ist, wobei der Rotor (6) insbesondere mit Permanentmagneten versehen ist und insbesondere drehzahlvariabel geregelt ist.

3. Turbinenvorrichtung nach Anspruch 1 oder 2, **dadurch gekennzeichnet, dass** die topfartige Aufnahme (9) mit einem Schmiermittel (12), insbesondere Öl, in einer vorbestimmten Menge, insbesondere über ein unteres Traglager (13) hinausreichend, gefüllt ist.

4. Turbinenvorrichtung nach einem der Ansprüche 1 bis 3, **dadurch gekennzeichnet, dass** die Hohlwelle (8) einstückig mit dem Rotor (6) ausgebildet ist.

5. Turbinenvorrichtung nach einem der Ansprüche 1 bis 4, **dadurch gekennzeichnet, dass** die topfartige Aufnahme (9) durch eine drehfest an die Hohlwelle (8) gekoppelten Kartusche (27) gebildet ist, wobei die Kartusche (27) das Schmiermittel und den Lagerzapfen (10) mit den Lagern (11) aufnimmt.

6. Turbinenvorrichtung nach einem der Ansprüche 1 bis 5, **dadurch gekennzeichnet, dass** die Kartusche (27) von der Hohlwelle (8) loszulösen, insbesondere durch Lösen von Verbindungsmitteln zwischen Kartuschenrand und Hohlwellenrand, und insbesondere mitsamt Schmiermittel zu entfernen ist.

7. Turbinenvorrichtung nach einem der Ansprüche 1 bis 6, **dadurch gekennzeichnet, dass** der Lagerzapfen (10) in einer die Turbinenvorrichtung zumindest oberseitig abschließenden Deckvorrichtung (14) angeordnet ist, wobei der Lagerzapfen (10) mitsamt den Lagern (11) durch Entfernen der Deckvorrichtung (14) aus der topfartigen Aufnahme (9) zu entfernen ist.

8. Turbinenvorrichtung nach einem der Ansprüche 1 bis 7, **dadurch gekennzeichnet, dass** der Generator von einer, insbesondere glockenartigen, Umhüllung (15) umschlossen ist, die zu Erzeugung eines Gasgegendruckbereichs (16) zumindest im Betrieb lediglich nach unten offen ist.

9. Turbinenvorrichtung nach einem der Ansprüche 1 bis 8, **dadurch gekennzeichnet, dass** im inneren (17) der Umhüllung (15) ein gegenüber einer Umhüllungswand (18) abgedichtetes ringförmiges Schutzmittel (19) eingesetzt ist, das einen Zwischenraum (20) mit der Öffnung (21) der Umhüllung (15) umfasst und einen Bereich (22) des Generators ausgrenzt.

10. Turbinenvorrichtung nach einem der Ansprüche 1 bis 9, **dadurch gekennzeichnet, dass** ein elektrisch mit dem Generator verbundener Umrichter (23) direkt an die Umhüllung (15) angebracht ist.

11. Turbinenvorrichtung nach einem der Ansprüche 1 bis 10, **dadurch gekennzeichnet, dass** ein Gaszugang (24) für ein Sperrgas (25), insbesondere ein Inertgas, insbesondere N₂, an den Gasgegendruckbereich (16) der glockenartigen Umhüllung (15) angebracht ist.

12. Turbinenvorrichtung nach einem der Ansprüche 1 bis 11, **dadurch gekennzeichnet, dass** die glockenartige Umhüllung (15) an einer Oberseite (26) durch die Deckvorrichtung (14) mit dem Lagerzapfen (10) abgeschlossen ist.

13. Verfahren zum Betreiben einer Turbinenvorrichtung, nach einem der Ansprüche 1 bis 12, wobei eine Kartusche (27) zur Lagerung eines Schmiermittels (12) durch Entfernen einer Deckvorrichtung (14) zu entnehmen ist, insbesondere für Reparatur- und Wartungsarbeiten.

## Claims

1. Turbine device (1) for a hydroelectric power station with a turbine impeller (3), which can be turned around a turbine rotational axis (2), and with turbine vanes (4) that are attached at an angle relative to the turbine impeller (3), and with a generator, which converts the mechanical rotational energy of the turbine impeller into electrical energy, whereby the generator is a ring generator (5) with a ring-shaped rotor (6) and a stator (7) arranged in a corresponding ring shape, **characterised by** the fact that the turbine rotational axis (2) is coupled firmly to the rotor (6) so that it can not turn, and rotation around the turbine rotational axis (2) is provided by a hollow shaft (8) with a potlike carrier (9), into which a fixed bearing spigot (10) with movable encompassing bearings (11) is inserted, and the turbine impeller (3) and rotor (6) can thus be turned around the bearing spigot (10).

2. Turbine device in accordance with Claim 1, **characterised by** the fact that the generator is a synchronous generator, whereby the rotor (6) is equipped in particular with permanent magnets and can in particular be controlled with variable speed.

3. Turbine device in accordance with Claim 1 or 2, **characterised by** the fact that the pot-like carrier (9) is filled with a lubricant (12), in particular oil, in a pre-determined quantity, in particular extending beyond a bottom supporting bearing (13).

4. Turbine device in accordance with one of the Claims 1 to 3, **characterised by** the fact that the hollow shaft (8) is designed as one piece with the rotor (6).

5. Turbine device in accordance with one of the Claims 1 to 4, **characterised by** the fact that the pot-like carrier (9) is formed by means of a cartridge (27), which is coupled firmly to the hollow shaft (8) so that it can not turn, whereby the cartridge (27) takes up the lubricant and bearing spigot (10) with the bearings (11).

6. Turbine device in accordance with one of the Claims 1 to 5, **characterised by** the fact that the cartridge (27) is to be released from the hollow shaft (8), in particular by releasing the connectors between the edge of the cartridge and the edge of the hollow shaft, and in particular is to be removed with all the lubricant.

7. Turbine device in accordance with one of the claims 1 to 6, **characterised by** the fact that the bearing spigot (10) is arranged in a cover device (14), which closes off the turbine device at least at the top, whereby the bearing spigot (10) with all the bearings (11) is to be removed from the pot-like carrier (9) by removing the cover device (14).

8. Turbine device in accordance with one of the Claims 1 to 7, **characterised by** the fact that the generator is enclosed by a shell (15), in particular a bell-like shell, which at least in operation is merely open at the bottom to generate a gas counterpressure area (16).

9. Turbine device in accordance with one of the Claims 1 to 8, **characterised by** the fact that in the interior (17) of the shell (15) there is a sealed, ring-shaped protector, which is inserted opposite one shell wall (18), and which encompasses an intermediate space (20) with the opening (21) of the shell (15) and demarcates an area (22) of the generator.

10. Turbine device in accordance with one of the Claims 1 to 9, **characterised by** the fact that an inverter (23), which is connected electrically to the generator, is attached directly to the shell (15).

11. Turbine device in accordance with one of the Claims 1 to 10, **characterised by** the fact that a gas inlet (24) for a barrier gas (25), in particular an inert gas and in particular N2, is attached to the gas counter-pressure area (16) of the bell-like shell (15).

12. Turbine device in accordance with one of the Claims 1 to 11, **characterised by** the fact that the bell-like shell (15) is closed off at one upper side (26) by the cover device (14) with the bearing spigot (10).

13. Process for operating a turbine device in accordance witch one of the Claims 1 to 12, whereby a cartridge (27) for the storage of a lubricant (12) can be removed, in particular for repair and maintenance work, by removing a cover device (14).

## Revendications

1. Dispositif de turbine (1) pour une centrale hydraulique avec une roue de turbine (3) pivotant autour d'un axe de turbine (2) avec des pales de turbine (4) qui sont placées de sorte à former un angle avec la roue de turbine (3), avec un générateur qui transforme l'énergie de rotation mécanique de la roue de turbine en énergie électrique, le générateur étant un générateur en anneau (5), avec un rotor de forme annulaire (6) et un stator (7) disposé également dans une forme annulaire, caractérisé en cela que l'axe de turbine (2) est couplé de manière fixe au rotor (6) et que la rotation se fait autour de l'axe de turbine (2) avec un arbre creux (8), avec un logement (9) en forme de pot dans lequel un tourillon de palier (10) fixe est inséré avec des paliers mobiles (11) situés autour et que la roue de turbine (3) et le rotor (6) peuvent pivotés autour du tourillon de palier (10).

2. Dispositif de turbine selon la revendication 1 caractérisé en cela que le générateur est un générateur synchrone, le rotor (6) étant notamment équipé d'aimants permanents et étant régulé notamment avec un régime variable.

3. Dispositif de turbine selon la revendication 1 ou 2 caractérisé en cela que le logement (9) en forme de pot est rempli de lubrifiant (12), notamment d'huile, dans une quantité prédéterminée, dépassant notamment un palier support inférieur (13).

4. Dispositif de turbine selon l'une des revendications 1 à 3 caractérisé en cela que l'arbre creux (8) forme une pièce avec le rotor (6).

5. Dispositif de turbine selon l'une des revendications 1 à 4 caractérisé en cela que le logement (9) en forme de pot et formé par une cartouche (27) couplée de manière fixe sur l'arbre creux (8), la cartouche (27) logeant le lubrifiant et le tourillon de palier (10) avec les paliers (11).

6. Dispositif de turbine selon l'une des revendications 1 à 5, caractérisé en cela que la cartouche (27) doit être détachée de l'arbre creux (8), et doit être notamment retirée par la déconnexion des moyens de connexion entre le bord de la cartouche et le bord de l'arbre ceux, notamment avec le lubrifiant.

7. Dispositif de turbine selon l'une des revendications 1 à 6 caractérisé en cela que le tourillon de palier (10) est placé dans un dispositif de couverture (14) fermant le dispositif de turbine au moins sur la partie supérieur, le tourillon de palier (10) devant être retire avec les paliers (11) en retirant le dispositif de couverture (14) du logement (9) en forme de pot

8. Dispositif de turbine selon l'une des revendications 1 à 7 caractérisé en cela que le générateur est entouré par une enveloppe (15), notamment en forme de cloche, qui, pour générer une zone de dépression de gaz (16), est ouverte au moins pendant le service seulement vers le bas.

9. Dispositif de turbine selon l'une des revendications 1 à 8 caractérisé en cela qu'à l'intérieur (17) de l'enveloppe (14), un moyen de protection (19) en forme de bague étanchéifié contre un bord d'enveloppe (18) est utilisé qui comprend un espace intermédiaire (20) avec l'ouverture (21) de l'enveloppe (15) et délimite une zone (22) du générateur.

10. Dispositif de turbine selon l'une des revendications 1 à 9 caractérisé en cela que qu'un variateur (23) connecté électriquement au générateur est situé directement sur l'enveloppe (15).

11. Dispositif de turbine selon l'une des revendications 1 à 10 caractérisé en cela qu'un accès de gaz (24) est placé pour un gaz d'étanchéité (25), notamment un gaz inerte, notamment N2, sur la zone de dépression de gaz (16) de l'enveloppe (15) en forme de cloche.

12. Dispositif de turbine selon l'une des revendications 1 à 1 caractérisé en cela que l'enveloppe en forme de cloche (15) se termine sur une partie supérieure (26) par le dispositif de couverture (14) avec le tourillon de palier (10).

13. Procédé d'exploitation d'un dispositif de turbine selon l'une des revendications 1 à 12 dans lequel une cartouche (27) doit être retirée pour le stockage d'un lubrifiant (12) en retirant un dispositif de couverture (14), notamment pour les travaux de réparation et de maintenance.
